# EUROPÄISCHE PATENTSCHRIFT

(11) **EP 3 130 513 B1**
(45) Veröffentlichungstag und Bekanntmachung des Hinweises auf die Patenterteilung: **26.06.2019**
(21) Anmeldenummer: 16181794.5
(22) Anmeldetag: 28.07.2016
(51) Int. Cl.: B60R 13/10

(54) **VORRICHTUNG ZUM HALTEN EINES SCHILDS**
DEVICE FOR HOLDING A PLATE
DISPOSITIF DESTINÉ À MAINTENIR UN PANNEAU

(30) Priorität: 11.08.2015 DE 102015215319
(43) Veröffentlichungstag der Anmeldung: 15.02.2017
(73) Patentinhaber: Adolf Würth GmbH & Co. KG, 74653 Künzelsau (DE); Würth International AG, 7000 Chur (CH)
(72) Erfinder: Reuther, Herbert, 74238 Krautheim-Gommersdorf (DE); Starke, Johannes, 74248 Ellhofen (DE)
(74) Vertreter: Patentanwälte Ruff, Wilhelm, Beier, Dauster & Partner mbB

(56) Entgegenhaltungen:
- AU-A1- 2010 201 768
- DE-A1-102010 044 536
- US-A- 1 833 742
- US-A- 2 555 706
- US-A- 2 603 013
- US-A- 2 935 281

## Beschreibung

Die Erfindung betrifft eine Vorrichtung zum Halten eines Schilds an einem Gegenstand, insbesondere eines Kennzeichenschilds an einem Kraftfahrzeug.

Aus der europäischen Patentschrift EP 0 633 557 B1 ist eine Vorrichtung zur Halterung von Schildern bekannt, die zur Befestigung von Kennzeichenschildern an Kraftfahrzeugen eingesetzt wird. Die Vorrichtung weist ein einstückiges Halteteil auf, an dem zwei aufklappbare Bügel mittels Filmscharnieren befestigt sind. Im eingeklappten Zustand bilden die beiden Haltebügel einen Rahmen, der dann ein Kennzeichenschild an dem Halteteil befestigt. Wenn eine solche Vorrichtung zum Halten eines Kennzeichenschilds an einer gebogenen oder gekrümmten Stoßstange montiert werden soll, muss auch das Halteteil entsprechend gebogen werden. Wenn die Krümmung zu stark ist, ist es nicht mehr in zufriedenstellender Weise möglich, die Haltebügel einzuklappen und zu arretieren.

Die Offenlegungsschrift AU 2010 201 768 A1 beschreibt eine Befestigungsvorrichtung für ein Zusatzkennzeichen. Die Befestigungsvorrichtung weist einen längserstreckten Abschnitt auf. Der längserstreckte Abschnitt weist parallel zu einer Erstreckungsrichtung des längserstreckten Abschnitts verlaufende Langlöcher sowie orthogonal zu der Erstreckungsrichtung des längserstreckten Abschnitts verlaufende Langlöcher auf.

Die Patentschrift US 2 555 706 A beschreibt eine Kennzeichenhalterung, die einen verstellbaren Rahmen aufweist. Der verstellbare Rahmen ist mehrteilig ausgebildet und weist in einem Innenbereich eine umlaufende Nut zur Aufnahme eines Kennzeichens auf. Teile des Rahmens sind relativ zu einander bewegbar. Zu diesem Zweck weist der Rahmen Zahnräder und Zahnstangen auf, mittels derer die Teile verlagert werden können.

Die Offenlegungsschrift DE 10 2010 044 536 A1 zeigt einen gattungsgemäßen Schildhalter zur Aufnahme eines Schildes mit einer Halteplatte mit Mitteln zur Befestigung des Schildhalters an einem Kraftfahrzeug und Haltemitteln für das Schild, die mindestens eine in einer Schildebene gegen eine Federkraft verschiebbare Haltenase umfassen.

Mit der Erfindung soll eine Vorrichtung zum Halten eines Schilds an einem Gegenstand insbesondere dahingehend verbessert werden, dass auch eine Montage an gebogenen bzw. gekrümmten Gegenständen, insbesondere Stoßstangen, möglich ist.

Erfindungsgemäß ist hierzu eine Vorrichtung zum Halten eines Schilds an einem Gegenstand, insbesondere eines Kennzeichenschilds an einem Kraftfahrzeug, vorgesehen, mit den Merkmalen des Anspruchs 1.

Durch den Verbindungssteg sind die beiden Halteteile im korrekten Abstand zueinander ange-ordnet, den sie später einnehmen müssen, um ein Schild, beispielsweise ein Kennzeichenschild, sicher zu montieren. Die erfindungsgemäße Vorrichtung kann selbstverständlich auch dazu verwendet werden, Kennzeichenschilder an geraden Stoßstangen oder geraden Gegenständen zuhalten. Auch dann sorgt der Verbindungssteg dafür, dass die Halteteile in exakt dem Abstand zueinander gehalten werden, den sie später zur Aufnahme des Schilds einnehmen müssen. Bei zu einer Fahrbahn senkrechten Montage des Schildes liegt diese Hochachse somit ebenfalls senkrecht zur Fahrbahn. Da der Verbindungssteg mittels Rast- und/oder Klemmeinrichtungen an den Halteteilen befestigbar ist, kann auf diese Weise der Verbindungssteg in einfacher Weise an den Halteteilen befestigt und auch wieder von den Halteteilen gelöst werden. Der Verbindungssteg dient dann während der Montage der Halteteile an dem Gegenstand lediglich als Montagehilfe.

Der Verbindungssteg ist vorteilhafterweise lösbar an den Halteteilen angeordnet.

Der Verbindungssteg ist dabei ausreichend flexibel, um sich der Kontur eines gekrümmten Ge-genstands, beispielsweise einer gekrümmten Stoßstange, anzupassen. Die beiden Halteteile können aber mithilfe des Verbindungsstegs auch an einem gekrümmten Gegenstand so befes-tigt werden, dass später ein gekrümmtes Schild exakt passend in die beiden Halteteile eingesetzt werden kann. Gegenüber einer Vorrichtung mit einem einstückigen Halteteil, das sich über die gesamte Länge des Schilds erstreckt, kann mit der erfindungsgemäßen Vorrichtung Material eingespart werden. Der Verbindungssteg ist vorteilhafter lösbar mit den Halteteilen verbunden und kann beispielsweise aber auch mittels eines Filmscharniers mit jedem der Halteteile ver-bunden sein. Der Verbindungssteg bildet dadurch im Wesentlichen lediglich eine Montagehilfe. Der Verbindungssteg kann aber auch bei montiertem Schild an den Halteteilen bzw. an der Stoßstange verbleiben, wenn dies beispielsweise als Klapperschutz zwischen dem Schild und dem Gegenstand erforderlich sein sollte oder wenn der Verbindungssteg bei montiertem Schild noch sichtbar ist und dann beispielsweise einen Werbeaufdruck trägt.

In Weiterbildung der Erfindung ist der Verbindungssteg mit einer Mittenmarkierung versehen, die eine Mitte zwischen den beiden Halteteilen anzeigt.

Durch Vorsehen eines Verbindungsstegs mit einer Mittenmarkierung ist es problemlos möglich, die beiden Halteteile symmetrisch zur Mitte eines Fahrzeugs bzw. zum Scheitelpunkt eines ge-krümmten Gegenstands zu montieren.

In Weiterbildung der Erfindung ist die Mittenmarkierung mittels einer Sollbruchstelle mit dem Verbindungssteg verbunden.

Soll der Verbindungssteg im montierten Zustand des Schilds an der Vorrichtung oder dem Schild verbleiben, kann die Mittenmarkierung aus optischen Gründen oder sonstigen Gründen störend sein. Wenn die Mittenmarkierung mittels einer Sollbruchstelle mit dem Verbindungssteg verbunden ist, kann die Mittenmarkierung nach erfolgter Montage der beiden Halteteile in einfacher Weise abgebrochen und dadurch entfernt werden.

In Weiterbildung der Erfindung ist der Verbindungssteg mittels Rast- und/oder Klemmeinrichtungen an den Halteteilen befestigbar.

Auf diese Weise kann der Verbindungssteg in einfacher Weise an den Halteteilen befestigt und auch wieder von den Halteteilen gelöst werden. Der Verbindungssteg dient dann während der Montage der Halteteile an dem Gegenstand lediglich als Montagehilfe.

Gemäß der Erfindung ist der Verbindungssteg in wenigstens zwei Positionen an den Halteteilen festlegbar.

Beispielsweise können die beiden Halteteile auf diese Weise in unterschiedlichen Abständen zueinander an dem Gegenstand befestigt werden. Bei Kennzeichenschildern kann dies im Ausnahmefall erforderlich sein, wenn beispielsweise ein kürzeres Wechselkennzeichen befestigt werden soll.

Gemäß der Erfindung ist wenigstens eines der Halteteile und/oder der Verbindungssteg mit einer leiterartig ausgebildeten Rast- und/oder Klemmeinrichtung versehen, wobei die Rast- und/oder Klemmeinrichtung eine Verbindung der Halteteile mit dem Verbindungssteg in unterschiedlichen Relativpositionen zueinander ermöglicht, wobei die Halteteile in den unterschiedlichen Relativpositionen einen unterschiedlichen Abstand zueinander aufweisen.

Mit einer leiterartig ausgebildeten Rast- und/oder Klemmeinrichtung kann die Anordnung der beiden Halteteile in unterschiedlichem Abstand zueinander in einfacher Weise realisiert werden.

In Weiterbildung der Erfindung ist der Verbindungssteg mit wenigstens einer Halteeinrichtung zum Befestigen des Verbindungsstegs an dem Schild versehen.

Mittels einer solchen Halteeinrichtung kann das Schild zusätzlich gesichert werden, beispiels-weise kann aber auch eine Oberkante bzw. Unterkante des Schilds verkleidet werden, sei es aus optischen Gründen, aus aerodynamischen Gründen oder um eine Fläche zum Anordnen von Werbeaufdrucken oder sonstigen weiteren Informationen bereitzustellen.

In Weiterbildung der Erfindung weist der Verbindungssteg eine Nut zum Aufnehmen eines Ran-des des Schilds auf.

Mittels einer Nut kann der Verbindungssteg in sehr einfacher Weise auf einen Rand des Schilds aufgeschoben werden.

In Weiterbildung der Erfindung sind zwei der Halteteile zum Aufnehmen eines rechten bzw. linken Endes des Schilds ausgebildet.

Kraftfahrzeugkennzeichenschilder weisen in der Regel eine viereckige, insbesondere eine längliche, Form auf. Erfahrungsgemäß genügt es dabei, lediglich das rechte und das linke Ende des Kennzeichenschilds an einer Stoßstange zu befestigen. Die beiden Halteteile können dadurch identisch beziehungsweise spiegelymmetrisch ausgebildet sein, so dass die Anzahl der für die Vorrichtung erforderlichen Kunststoffspritzgusswerkzeuge verringert werden kann.

In Weiterbildung der Erfindung sind die Halteteile mit Rasthaken und/oder Nuten zum Befestigen des Schilds versehen.

Im montierten Zustand der Halteteile kann dadurch das Kennzeichenschild in sehr einfacher Weise in die beiden Halteteile eingerastet werden. Das Kennzeichenschild kann zur Montage an einer gebogenen oder gekrümmten Stoßstange hierzu entweder vorgebogen werden oder während des eigentlichen Montagevorgangs der Kontur der Stoßstange angepasst werden. Das Kennzeichenschild kann dadurch werkzeuglos an den Halteteilen befestigt werden.

In Weiterbildung der Erfindung sind die beiden Halteteile zum Aufnehmen eines rechten bzw. linken Endes des Schilds mit jeweils einem Anschlag für die rechte bzw. linke Seitenkante des Schilds und mit jeweils zwei Rasthaken zum Übergreifen einer Kante, beispielsweise einer Oberkante bzw. Unterkante, des Schilds versehen.

Mittels der Anschläge kann eine Position des Schilds in Querrichtung fixiert werden. Die Rasthaken sichern dann eine Position des Schilds in Hochrichtung, indem sie eine Oberkante bzw. Unterkante des Schilds übergreifen. Die Anschläge können mittels Sollbruchstellen mit dem jeweiligen Halteteil verbunden sein.

In Weiterbildung der Erfindung sind die Halteteile aus einem weicheren und einem härteren Kunststoffmaterial gebildet, wobei Anlageflächen für das Schild wenigstens teilweise aus dem weicheren Kunststoffmaterial gebildet sind.

Beispielsweise können die Halteteile mittels eines Zwei-Komponentenspritzverfahrens hergestellt sein. Der weichere Kunststoff verhindert dann, dass das Schild an den Halteteilen klappert.

In Weiterbildung der Erfindung ist der Verbindungssteg aus einem weicheren und einem härteren Kunststoffmaterial gebildet, wobei ein Bereich in der Mitten zwischen den beiden Halteteilen wenigstens teilweise aus dem weicheren Kunststoffmaterial gebildet ist.

Durch eine solche Ausbildung des Verbindungsstegs kann die Flexibilität bzw. Biegsamkeit des Verbindungsstegs erhöht werden. Darüber hinaus ist es selbstverständlich möglich, für den Fall, dass der Verbindungssteg zwischen einer Stoßstange und dem Schild verbleibt, mittels des weicheren Kunststoffmaterials, das dann an der Rückseite des Schildes und/oder an der Oberfläche der Stoßstange anliegt, eine Klapperneigung des Schilds deutlich zu verringern bzw. ein Klappern vollständig zu verhindern.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine erfindungsgemäße Vorrichtung in einer Ansicht von schräg vorne,
- Fig. 2: das linke Halteteil der Vorrichtung der Fig. 1 von schräg oben,
- Fig. 3: das rechte Halteteil der Vorrichtung der Fig. 1 von schräg oben,
- Fig. 4: eine abschnittsweise Draufsicht auf den Verbindungssteg der Vorrichtung der Fig. 1,
- Fig. 5: den Verbindungssteg der Vorrichtung der Fig. 1 von schräg oben,
- Fig. 6: die Vorrichtung der Fig. 1 mit einem daran montierten Kennzeichenschild in einer Draufsicht,
- Fig. 7: eine Ansicht auf die Schnittebene A-A in Fig. 6 und
- Fig. 8: eine Ansicht auf die Schnittebene B-B in Fig. 6.

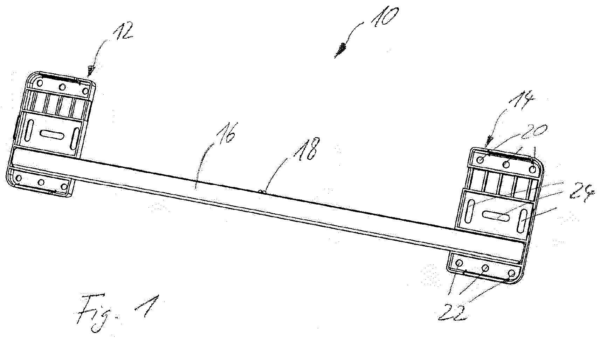

Fig. 1 zeigt eine erfindungsgemäße Vorrichtung zum Halten eines Schilds an einem Gegenstand. Die Vorrichtung der Fig. 1 ist zum Halten bzw. Befestigen eines Schilds an der Stoßstange eines Kraftfahrzeugs vorgesehen. Die Vorrichtung 10 weist zwei Halteteile 12, 14 auf, die identisch beziehungsweise spiegelsymmetrisch ausgebildet sind, sowie einen Verbindungssteg 16, der die beiden Halteteile 12, 14 miteinander verbindet und in einem konstanten Abstand zueinander hält.

In dem Zustand der Fig. 1 ist der Verbindungssteg 16 dafür vorgesehen, die beiden Halteteile 12, 14 für eine Montage an einer Stoßstange eines Kraftfahrzeugs auf gleicher Höhe und in einem vordefinierten Abstand zueinander zu halten, wobei der Abstand der beiden Halteteile 12, 14 auf die Länge eines üblichen Kraftfahrzeugkennzeichenschilds abgestimmt ist. Die erfindungsgemäße Vorrichtung 10 ist besonders dann vorteilhaft, wenn ein Kennzeichenschild an einer gebogenen oder gekrümmten Stoßstange montiert werden soll. Der Verbindungssteg 16 wird hierzu dann an den Scheitelpunkt bzw. die Mitte der Stoßstange angelegt, so dass eine Mittenmarkierung 18 an dem Verbindungssteg exakt am Scheitelpunkt bzw. der Mitte der Stoßstange angeordnet ist. Der Verbindungssteg 16 kann dann leicht gebogen werden, so dass er sich an die Kontur der gekrümmten Stoßstange anschmiegt. Auch bei einer solchen Biegung des Verbindungsstegs 16 bleiben die beiden Halteteile 12, 14 aber unverändert in konstantem Abstand zueinander und auch auf gleicher Höhe. Dadurch können die beiden Halteteile 12, 14 dann an der Stoßstange befestigt werden. Hierzu werden entweder vorhandene Schraublöcher in der Stoßstange verwendet oder es werden Löcher in die Stoßstange gebohrt, so dass die beiden Halteteile 12, 14 dann mittels einer oder mehrerer Schrauben, die in die Durchgangsbohrungen 20, 22 oder die Langlöcher 24 eingesteckt werden, an der Stoßstange befestigt werden. Wesentlich ist hierbei wieder, dass während der Montage der beiden Halteteile 12, 14 diese mittels des Verbindungsstegs 16 in der vorgesehenen Endposition gehalten werden. Die Montage der Halteteile 12, 14 ist dadurch ohne zeitaufwändiges Messen, Justieren oder dergleichen möglich. Der Verbindungssteg 16 wird also ausgehend von dem in Fig. 1 dargestellten geradlinigen Zustand in einem gebogen oder gekrümmten Zustand gebracht, der dem Verlauf der Stoßstange folgt. Eine Krümmung des Verbindungsstegs verläuft dann um eine Hochachse, die in Fig. 1 von links unten nach rechts oben und damit senkrecht zum Verbindungssteg 16 und parallel zu einem zu befestigenden Schild verläuft. In Bezug auf eine Biegung in anderen Richtungen ist der Verbindungssteg wesentlich steifer ausgebildet, so dass die beiden Halteteile bei waagrechtem Verbindungssteg auf gleicher Höhe an einer Stoßstange gehalten werden, bevor die Halteteile an der Stoßstange befestigt werden.

Wenn die beiden Halteteile 12, 14 dann an der Stoßstange montiert sind, so kann der Verbindungssteg entfernt werden. Es ist aber durchaus möglich, den Verbindungsteg in der in Fig. 1 dargestellten Position an den Halteteilen zu belassen, beispielsweise dann, wenn der Verbindungssteg als Zwischenlage zwischen dem Kennzeichenschild und der Stoßstange dienen soll, beispielsweise um einen konstanten Abstand zur Stoßstange herzustellen oder um einer Klapperneigung des Schilds an der Stoßstange entgegenzuwirken. Der Verbindungssteg kann dann an seiner Vorderseite und an seiner Hinterseite aus weicherem Kunststoff bestehen.

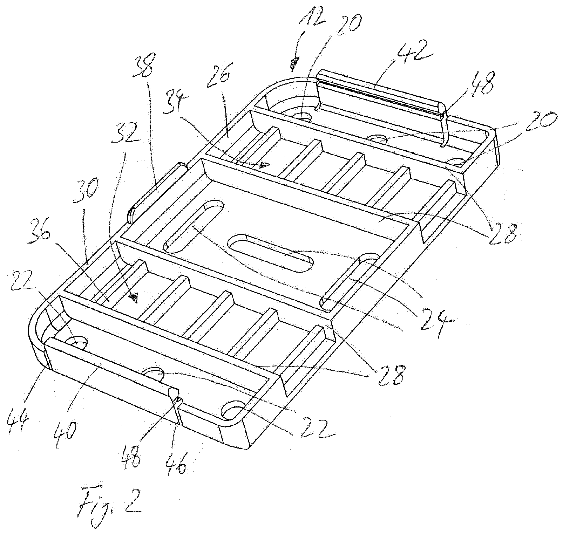

Die Darstellung der Fig. 2 zeigt das in Fig. 1 linke Halteteil 12 in einer Ansicht von schräg oben und bei abgenommenem Verbindungssteg 16. Das Halteteil 12 ist einstückig ausgebildet, beispielsweise als Kunststoffspritzgussteil und weist eine Grundplatte 26 auf, die mit den Durchgangsöffnungen 20, 22 sowie den Langlöchern 24 versehen ist, die zum Durchstecken von Befestigungsschrauben dienen. Die Grundplatte 26 ist in mehrere Felder unterteilt, die jeweils durch Stege 28 voneinander getrennt sind. Darüber hinaus weist die Grundplatte 26 einen im Wesentlichen umlaufenden Rand 30 auf. Zusammen mit den Stegen 28 sorgt der umlaufende Rand 30 für eine Versteifung der Grundplatte 26.

Die Grundplatte 26 ist mit zwei leiterartig ausgebildeten Klemmeinrichtungen 32 und 34 versehen. Die Klemmeinrichtungen 32, 34 weisen jeweils mehrere im konstanten Abstand zueinander angeordnete Klemmstege 36 auf. Die Klemmstege 36 sind senkrecht zu zwei benachbarten Stegen 28 angeordnet und verbinden diese. Dadurch ergibt sich eine leiterartige Anordnung der Klemmstege 36 und der an diese angrenzenden Stege 28. Die Klemmeinrichtungen 32, 34 sind passend zu den Enden des Verbindungsstegs 16 ausgebildet. Der Verbindungssteg 16 kann dadurch in die Klemmeinrichtung 32 oder die Klemmeinrichtung 34 eingesetzt werden. Durch leichtes Andrücken verklemmt das Ende des Verbindungsstegs 16 dann in der Klemmeinrichtung 32 bzw. 34. Um eine exakte Anordnung des Verbindungsstegs 16 in den Klemmeinrichtungen 32, 34 sicherzustellen, ist dieser in nicht dargestellter Weise an seiner Unterseite mit zu den Klemmstegen 36 passenden Nuten versehen.

Es ist auch ohne weiteres zu erkennen, dass der Verbindungssteg 16 in mehreren unterschiedlichen Positionen an den beiden Halteteilen 12, 14 befestigt werden kann. Dies erfolgt dadurch, dass der Verbindungssteg 16 entweder auf alle Klemmstege 36 aufgesetzt wird oder so in die Klemmeinrichtung 32 oder 34 eingesetzt wird, dass lediglich einige der Klemmstege 36 vom Verbindungssteg 16 überdeckt werden. Der Abstand der Klemmstege 36 ist dabei zweckmäßigerweise auf genormte Längen von Kennzeichenschildern abgestimmt.

Das Halteteil 12 ist an seiner in Fig. 2 linken Seite mit einem Anschlag 38 in Form einer über den Rand 30 hinausragenden Leiste versehen. Der Anschlag 38 dient dazu, ein Kennzeichenschild an seinem linken Ende relativ zum Halteteil 12 zu fixieren.

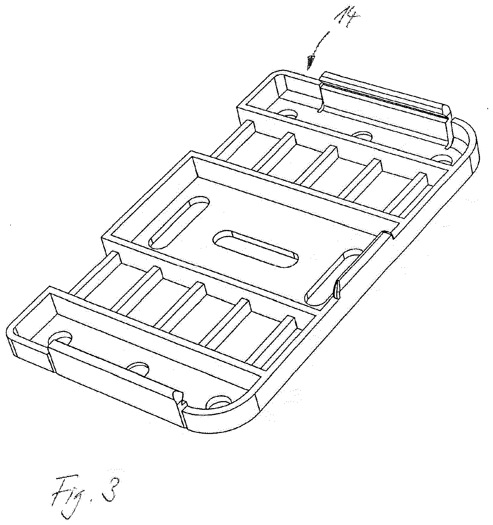

Das Halteteil 12 ist darüber hinaus mit zwei Rasthaken 40 bzw. 42 versehen, die einander gegenüberliegen und die, wie der Anschlag 38, sich über den Rand 30 der Grundplatte 26 erheben. Die Rasthaken 40, 42 sind von den übrigen Bereichen des Rands 30 aber durch jeweils zwei Einschnitte 44, 46 getrennt, die bis zum Boden der Grundplatte 26 durchgehen. Die Rasthaken 40 sind dadurch in der Lage, relativ zur Grundplatte 26 um einen geringen Winkel zu Verschwenken. Dieser Winkel reicht dann aus, um den oberen Rand bzw. den unteren Rand eines Kennzeichenschilds in eine jeweilige Nut 48 an den Rasthaken 40, 42 einzuschnappen. Sobald der obere bzw. untere Rand in jeweils eine Nut 48 an den Rasthaken 40 bzw. 42 eingeschnappt ist und gleichzeitig ein Seitenrand des Schilds an dem Anschlag 38 anliegt, ist das Halteteil 12 in seiner Position relativ zu dem Kennzeichenschild fixiert. Wird dann an das gegenüberliegende Ende das in Fig. 3 dargestellte Halteteil 14 eingeschnappt, sitzt das Kennzeichenschild unverrückbar zwischen den beiden Halteteilen 12, 14 und kann lediglich wieder durch Ausschnappen aus den Rasthaken 40, 42 von den Halteteilen 12, 14 bzw. der Stoßstange eines Kraftfahrzeugs entfernt werden. Im montierten Zustand liegt das Schild auf der Oberseite der Stege 38 auf. Auf diesen Oberseiten der Stege 38 kann beispielsweise weicheres Kunststoffmaterial angeordnet sein, um einem Klappern des Schilds entgegenzuwirken.

Beim Befestigen eines Kennzeichenschilds an den Halteteilen 12, 14 kann der Verbindungssteg 16 dabei montiert sein. Denn der Verbindungssteg 16 wird so in die Klemmeinrichtungen 32 bzw. 34 eingesetzt, dass seine Oberseite nicht über die Oberkante der Stege 28 hinausragt.

Das in Fig. 3 dargestellte rechte Halteteil 14 ist identisch zum Halteteil 12 der Fig. 2 ausgebildet und wird daher nicht erneut beschrieben.

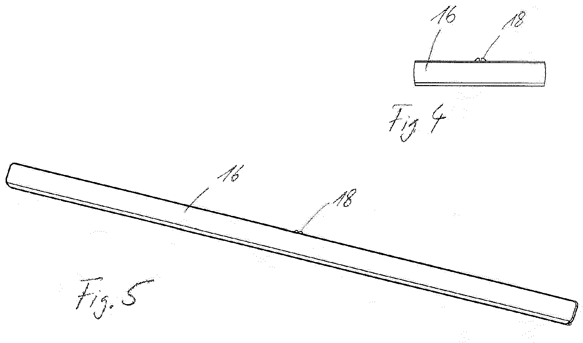

Die Darstellung der Fig. 4 zeigt abschnittsweise den Verbindungssteg 16 mit der Mittenmarkierung 18. Die Mittenmarkierung 18 ist dabei in Form einer sogenannten Kimme ausgebildet. Zwei nebeneinander angeordnete Vorsprünge bilden zwischen sich einen Spalt. Dieser Spalt zwischen den beiden Vorsprüngen kann dann beispielsweise mit einer Markierung auf einer Stoßstange in Deckung gebracht werden. Die Markierung auf der Stoßstange kann beispielsweise auch ein Bleistiftstrich sein, der vor der Montage der Vorrichtung 10 exakt am Scheitelpunkt bzw. in der Mitte der Stoßstange angebracht wird. Mittels der Mittenmarkierung 18 kann dadurch eine sehr exakte Positionierung der Vorrichtung 10 relativ zur Stoßstange erfolgen. Dies ist erforderlich, da das menschliche Auge auch sehr geringe Abweichungen von der Symmetrie eines Kraftfahrzeugs auflösen kann. Um eine besonders exakte Montage des Kennzeichenschilds zu ermöglichen, kann beispielsweise auf den Verbindungssteg 16 eine Wasserwage aufgelegt werden, um dann auch eine exakt horizontale Montage des Kennzeichenschilds sicherzustellen.

Die Darstellung der Fig. 5 zeigt den Verbindungssteg 16 in einer Ansicht von schräg oben.

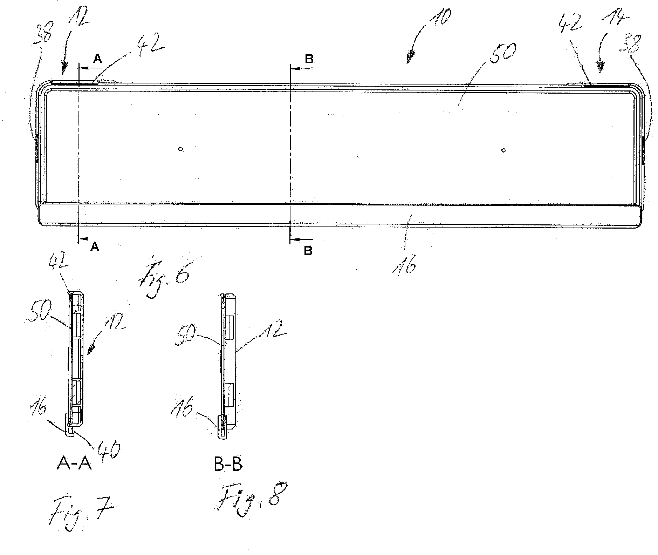

Die Darstellung der Fig. 6 zeigt in einer Vorderansicht die erfindungsgemäße Vorrichtung 10 mit einem daran befestigten Kennzeichenschild 50. Wie Fig. 6 zu entnehmen ist, ist das linke Ende des Kennzeichenschilds 50 in das Halteteil 12 aufgenommen und das rechte Ende des Kennzeichenschilds 50 ist in das Halteteil 14 aufgenommen. Der linke Rand des Kennzeichenschilds 50 schlägt dabei an dem Anschlag 38 des Halteteils 12 an, das rechte Ende des Kennzeichenschilds 50 schlägt an dem Anschlag 38 des rechten Halteteils 14 an. Der obere Rand des Kennzeichenschilds 50 ist in die Rastnase 42 des linken Halteteils 12 bzw. in die Rastnase 42 des rechten Halteteils 14 eingerastet. In gleicher Weise, was in Fig. 6 aber nicht erkennbar ist, ist der untere Rand des Kennzeichenschilds 50 in die Rastnase 40 des linken Halteteils 12 bzw. des rechten Halteteils 14 eingerastet. Das Kennzeichenschild 50 ist dadurch unverrückbar relativ zu den Halteteilen 12, 14 befestigt.

Der Verbindungssteg 16 ist dabei nicht mehr in der in Fig. 1 dargestellten Position, sondern ist auf den unteren Rand des Schilds 50 aufgeschoben worden. Der Verbindungssteg 16 kann beispielsweise mit einem Werbeaufdruck versehen sein, er kann beispielsweise aber auch aus rein optischen Gründen oder aerodynamischen Gründen den unteren Rand des Kennzeichenschilds 50 verdecken. Es ist selbstverständlich in gleicher Weise möglich, den Verbindungssteg 16 auf den oberen Rand des Kennzeichenschilds 50 aufzuschieben.

In der Schnittansicht der Fig. 7 ist zu erkennen, dass der obere Rand des Kennzeichenschilds 50 in die Rasthaken 42 eingerastet ist und dass der untere Rand des Schilds in die Rasthaken 40 des Halteteils 12 eingerastet ist. Darüber hinaus ist zu erkennen, dass der Verbindungssteg 16 in dem Bereich, in dem er in der Position der Fig. 6 dann oberhalb des Halteteils 12 angeordnet ist, lediglich auf dem Halteteil 12 aufliegt, gleichzeitig aber mit einer passenden Nut auf die Oberseite der Rasthaken 40 aufgerastet ist.

Im Bereich zwischen den beiden Halteteilen 12, 14 ist der Verbindungssteg 16 hingegen mit einer im Querschnitt U-förmigen Nut versehen und mit dieser Nut ist der Verbindungssteg 16 auf den unteren Rand des Schilds 50 aufgeschoben. Dies ist in der Schnittansicht der Fig. 8 zu erkennen. Der Verbindungssteg 16 kann somit, nachdem die beiden Halteteile 12, 14 an einer Stoßstange in der gewünschten Position befestigt sind, von den Halteteilen 12, 14 abgenommen werden, indem der Verbindungssteg 16 aus den Klemmabschnitten 32 bzw. 34 der Halteteile 12, 14 herausgenommen wird. Daraufhin kann das Schild 50 in die beiden Halteteile 12, 14 eingerastet werden und ist dadurch mittels der Halteteile 12, 14 auch sicher an einer Stoßstange befestigt. Wie bereits ausgeführt wurde, kann das Schild 50 dabei in gebogener Position und einer Kontur der Stoßstange folgend befestigt werden.

Nachfolgend kann, falls dies gewünscht ist, der Verbindungssteg 16 auf den unteren Rand des Schilds 50 aufgeschoben werden. Bevor der Steg 16 aufgeschoben wird, wird die mit einer Sollbruchstelle mit dem Verbindungssteg 16 verbundene Mittenmarkierung 18 abgebrochen. Die Mittenmarkierung 18 stört dadurch nicht das Erscheinungsbild der Vorrichtung 10 mit dem Kennzeichenschild 50.

Die erfindungsgemäße Vorrichtung 10 ermöglicht eine einfache und präzise Montage von Kennzeichenschildern auch dann, wenn die Kennzeichenschilder 50 an einer gekrümmten bzw. gebogenen Stoßstange montiert werden sollen und dann beispielsweise selbst leicht gebogen werden müssen, um der Kontur der Stoßstange zu folgen.

## Patentansprüche

1. Vorrichtung zum Halten eines Schilds an einem Gegenstand, insbesondere eines Kennzeichenschilds (50) an einem Kraftfahrzeug, mit wenigstens zwei an dem Gegenstand befestigbaren Halteteilen (12, 14), wobei die Halteteile (12, 14) mit Haltemitteln zum Befestigen des Schilds an dem Gegenstand versehen sind, und mit einem in und entgegen seiner Längsrichtung drucksteifen und zugsteifen Verbindungssteg (16), der die Halteteile (12,14) verbindet, wobei der Verbindungssteg (16) dabei ausreichend flexibel ist, um sich der Kontur eines gekrümmten Gegenstands, beispielsweise einer gekrümmten Stoßstange, anzupassen und so biegbar ausgebildet ist, dass er einen geradlinigen Zustand oder einen gekrümmten Zustand einnehmen kann, wobei der Verbindungssteg in dem gekrümmten Zustand um eine Hochachse gebogen ist, die parallel zu dem zu befestigenden Schild verläuft, **dadurch gekennzeichnet, dass** der Verbindungssteg (16) mittels Rast- und/oder Klemmeinrichtungen an den Halteteilen (12, 14) befestigbar ist sowie in wenigstens zwei Positionen an den Halteteilen (12, 14) festlegbar ist und dass wenigstens eines der Halteteile (12, 14) und/oder der Verbindungssteg (16) mit einer leiterartig ausgebildeten Rast- und/oder Klemmeinrichtung (32, 34) versehen ist, wobei die Rast- und/oder Klemmeinrichtung (32, 34) eine Verbindung der Halteteile (12, 14) mit dem Verbindungssteg (16) in unterschiedlichen Relativpositionen zueinander ermöglicht, wobei die Halteteile (12, 14) in den unterschiedlichen Relativpositionen einen unterschiedlichen Abstand zueinander aufweisen.

2. Vorrichtung nach Anspruch 1, **dadurch gekennzeichnet, dass** der Verbindungssteg (16) lösbar an den Halteteilen (12, 14) angeordnet ist.

3. Vorrichtung nach einem der Ansprüche 1 oder 2, **dadurch gekennzeichnet, dass** der Verbindungssteg (16) mit einer Mittenmarkierung (18) versehen ist, wobei die Mittenmarkierung (18) dann, wenn der Verbindungssteg (16) an den Halteteilen (12, 14) befestigt ist, eine Mitte zwischen den beiden äußeren Halteteilen (12, 14) anzeigt.

4. Vorrichtung nach Anspruch 3, **dadurch gekennzeichnet, dass** die Mittenmarkierung (18) mittels einer Sollbruchstelle mit dem Verbindungssteg (16) verbunden ist.

5. Vorrichtung nach einem der vorstehenden Ansprüche, **dadurch gekennzeichnet, dass** der Verbindungssteg (16) mit wenigstens einer Halteeinrichtung zum Befestigen des Verbindungsstegs an dem Schild versehen ist.

6. Vorrichtung nach Anspruch 5, **dadurch gekennzeichnet, dass** der Verbindungssteg (16) eine Nut zum Aufnehmen eines Rands des Schildes aufweist.

7. Vorrichtung nach einem der vorstehenden Ansprüche, **dadurch gekennzeichnet, dass** zwei der Halteteile (12, 14) zum Aufnehmen eines rechten beziehungsweise linken Endes des Schilds ausgebildet sind.

8. Vorrichtung nach einem der vorstehenden Ansprüche, **dadurch gekennzeichnet, dass** die Halteteile (12, 14) mit Rasthaken (40, 42) und/oder Nuten zum Befestigen des Schilds versehen sind.

9. Vorrichtung nach Anspruch 7 und 8, **dadurch gekennzeichnet, dass** die beiden Halteteile (12, 14) zum Aufnehmen eines rechten beziehungsweise linken Endes des Schilds mit jeweils einem Anschlag (38) für die rechte beziehungsweise linke Seitenkante des Schilds und mit jeweils zwei Rasthaken (40, 42) zum Übergreifen einer Kante, insbesondere einer Oberkante beziehungsweise Unterkante, des Schilds versehen sind.

10. Vorrichtung nach Anspruch 9, **dadurch gekennzeichnet, dass** die Anschläge (38) mittels Sollbruchstellen mit dem jeweiligen Halteteil (12,14) verbunden sind.

11. Vorrichtung nach wenigstens einem der vorstehenden Ansprüche, **dadurch gekennzeichnet, dass** die Halteteile aus einem weicheren und einem härteren Kunststoffmaterial gebildet sind, wobei Anlageflächen für das Schild wenigstens teilweise aus dem weicheren Kunststoffmaterial gebildet sind.

12. Vorrichtung nach wenigstens einem der vorstehenden Ansprüche, **dadurch gekennzeichnet, dass** der Verbindungssteg aus einem weicheren und einem härteren Kunststoffmaterial gebildet ist, wobei ein Bereich in der Mitte zwischen den beiden Halteteilen wenigstens teilweise aus dem weicheren Kunststoffmaterial gebildet ist.

## Claims

1. Device for holding a plate on an object, in particular a license plate (50) on an automotive vehicle, comprising at least two mounting parts (12, 14) fixable to the object, wherein the mounting parts (12, 14) are provided with support means for fixing the plate on the object, and comprising a connecting bridge (16) which is compressionally rigid and tensionally rigid in and counter the longitudinal direction thereof, said connecting bridge connecting the mounting parts (12, 14), wherein the connecting bridge (16) is sufficiently flexible in order to adapt to the contour of a curved object, for example a curved bumper, and is bendable in such a manner that it can assume a rectilinear condition or a curved condition, wherein the connecting bridge in the curved condition is bent about a vertical axis extending in parallel to the plate to be fixed, **characterized in that** the connecting bridge (16) is fixable to the mounting parts (12, 14) by means of locking devices and/or clamping devices, and is retainable on the mounting parts (12, 14) in at least two positions, and **in that** at least one of the mounting parts (12, 14) and/or the connecting bridge (16) are/is provided with a ladder-type locking and/or clamping device (32, 34), wherein the locking and/or clamping device (32, 34) allows connection of the mounting parts (12, 14) to the connecting bridge (16) in different relative positions in relation to each other, wherein the mounting parts (12, 14) in the different relative positions have a different mutual spacing.

2. Device according to claim 1, **characterized in that** the connecting bridge (16) is detachably disposed on the mounting parts (12, 14).

3. Device according to any of claims 1 or 2, **characterized in that** the connecting bridge (16) is provided with a central marking (18), wherein the central marking (18) in case that the connecting bridge (16) is fixed to the mounting parts (12, 14), indicates a middle between the two outer mounting parts (12, 14).

4. Device according to claim 3, **characterized in that** the central marking (18) is connected to the connecting bridge (16) via a predetermined breaking point.

5. Device according to any of the preceding claims, **characterized in that** the connecting bridge (16) is provided with at least one holding device for fixing the connecting bridge to the plate.

6. Device according to claim 5, **characterized in that** the connecting bridge (16) includes a groove for receiving an edge of the plate.

7. Device according to any of the preceding claims, **characterized in that** two of the mounting parts (12, 14) are configured for receiving a right end and a left end, respectively, of the plate.

8. Device according to any of the preceding claims, **characterized in that** the mounting parts (12, 14) are provided with locking hooks (40, 42) and/or groves for fixing the plate.

9. Device according to claim 7 and 8, **characterized in that**, for receiving a right end and a left end, respectively, of the plate, the two mounting parts (12, 14) are provided with a respective stop (38) for the right and left, respectively, lateral edges of plate and with two respective locking hooks (40, 42) for engaging over an edge, in particular an upper edge and a lower edge, respectively, of the plate.

10. Device according to claim 9, **characterized in that** the stops (38) are each connected to the respective mounting part (12, 14) via predetermined breaking points.

11. Device according to at least one of the preceding claims, **characterized in that** the mounting parts are composed of a softer and a harder synthetic material, wherein contact surfaces for the plate are at least partially composed of the softer synthetic material.

12. Device according to at least one of the preceding claims, **characterized in that** the connecting bridge is composed of a softer and a harder synthetic material, wherein a region in the middle between the two mounting parts is at least partially composed of the softer synthetic material.

## Revendications

1. Dispositif de retenue d'une plaque sur un objet, notamment une plaque d'immatriculation (50) sur un véhicule automobile, le dispositif de retenue comprenant au moins deux éléments de retenue (12, 14) pouvant être fixés à l'objet, les éléments de retenue (12, 14) étant pourvus de moyens de retenue destinés à fixer la plaque à l'objet, et une nervure de liaison (16) qui est rigide en compression et en traction dans sa direction longitudinale et à l'opposé de celle-ci et qui relie les éléments de retenue (12, 14), la nervure de liaison (16) étant suffisamment flexible pour s'adapter au contour d'un objet incurvé, par exemple d'un pare-chocs incurvé, et étant conçue pour être souple de manière à pouvoir prendre un état rectiligne ou un état incurvé, la nervure de liaison étant courbée à l'état incurvé autour d'un axe vertical parallèle à la plaque à fixer, **caractérisé en ce que** la nervure de liaison (16) peut être fixée aux éléments de retenue (12, 14) à l'aide de moyens d'encliquetage et/ou de serrage et peut être immobilisée dans au moins deux positions au niveau des éléments de retenue (12, 14) et **en ce que** l'un au moins des éléments de retenue '(12, 14) et/ou la nervure de liaison (16) est muni(e) d'un moyen d'encliquetage et/ou de serrage de type échelle (32, 34), le dispositif d'encliquetage et/ou de serrage (32, 34) permet de relier les éléments de retenue (12, 14) à la nervure de liaison (16) dans différentes positions relatives les unes par rapport aux autres, les éléments de retenue (12, 14) présentant entre eux des distances différente dans les différentes positions relatives.

2. Dispositif selon la revendication 1, **caractérisé en ce que** la nervure de liaison (16) est disposée de manière amovible au niveau des éléments de liaison (12, 14) .

3. Dispositif selon l'une des revendications 1 ou 2, **caractérisé en ce que** la nervure de liaison (16) est munie d'un repère central (18), le repère centrale (18) indiquant milieu entre les deux éléments de retenue extérieurs (12, 14) seulement lorsque la nervure de liaison (16) est fixée aux éléments de retenue (12, 14) .

4. Dispositif selon la revendication 3, **caractérisé en ce que** le repère central (18) est relié à la nervure de liaison (16) par d'un point destiné à la rupture.

5. Dispositif selon l'une des revendications précédentes, **caractérisé en ce que** la nervure de liaison (16) est munie d'au moins un moyen de retenue pour fixer la nervure de liaison à la plaque.

6. Dispositif selon la revendication 5, **caractérisé en ce que** la nervure de liaison (16) comporte une gorge destinée à recevoir un bord de la plaque.

7. Dispositif selon l'une des revendications précédentes, **caractérisé en ce que** deux des éléments de retenue (12, 14) sont conçus pour recevoir une extrémité droite ou gauche de la plaque.

8. Dispositif selon l'une des revendications précédentes, **caractérisé en ce que** les éléments de retenue (12, 14) sont pourvus de crochets d'encliquetage (40, 42) et/ou de gorges destinés à fixer la plaque.

9. Dispositif selon les revendications 7 et 8, **caractérisé en ce que** les deux éléments de retenue (12, 14) sont destinés à recevoir une extrémité droite ou gauche de la plaque, chacune avec une butée (38) destinée au bord latéral droit respectivement gauche de la plaque et avec deux crochets d'encliquetage (40, 42) destinés à s'engager par-dessus un bord, en particulier un bord supérieur respectivement un bord inférieur, de la plaque.

10. Dispositif selon la revendication 9, **caractérisé en ce que** les butées (38) sont reliées à l'élément de retenue respectif (12, 14) par des points destinés à la rupture.

11. Dispositif selon l'une au moins des revendications précédentes, **caractérisé en ce que** les éléments de retenue sont formés à partir d'une matière synthétique relativement molle et d'une matière synthétique relativement dure, les surfaces d'appui de la plaque étant formées au moins partiellement à partir de la matière synthétique relativement molle.

12. Dispositif selon l'une au moins des revendications précédentes, **caractérisé en ce que** la nervure de liaison est formée à partir d'une matière synthétique relativement molle et d'une matière synthétique relativement dure, une région située au milieu entre les deux éléments de retenue étant formée au moins partiellement à partir de la matière synthétique relativement molle.
